## Europäisches Patentamt
## European Patent Office
## Office européen des brevets

(19)

(11) Numéro de publication: **0 061 948**
**B1**

(12) **FASCICULE DE BREVET EUROPEEN**

(45) Date de publication du fascicule du brevet: **13.02.85**

(51) Int. Cl.⁴: **F 01 D 5/30**

(21) Numéro de dépôt: **82400394.1**

(22) Date de dépôt: **08.03.82**

(54) **Rotor de turboréacteur, notamment de soufflante, comportant des dispositifs de verrouillage d'aubes et de fixation d'un capot avant.**

(30) Priorité: **27.03.81 FR 8106576**

(43) Date de publication de la demande:
**06.10.82 Bulletin 82/40**

(45) Mention de la délivrance du brevet:
**13.02.85 Bulletin 85/7**

(84) Etats contractants désignés:
**DE FR GB**

(56) Documents cités:
**FR - A - 1 501 492**
**FR - A - 2 013 647**
**FR - A - 2 345 605**
**GB - A - 739 870**
**US - A - 3 799 693**
**US - A - 4 033 705**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Surdi, Jean Marc, 2, square Lamartine, F-77000 Melun (FR)**

(74) Mandataire: **Moinat, François et al, S.N.E.C.M.A. Service des Brevets Boîte Postale 81, F-91003 Evry Cedex (FR)**

BUNDESDRUCKEREI BERLIN

## Description

L'invention concerne un rotor de turboréacteur, notamment de soufflante, comportant des dispositifs de verrouillage d'aubes de soufflante et de fixation d'un capot avant, les aubes étant maintenues dans des rainures axiales dudit rotor.

Dans les soufflantes de turboréacteurs classiques, les aubes sont verrouillées dans les rainures axiales du rotor de manière à être immobilisées tant radialement qu'axialement. Généralement, on glisse entre le pied d'aube et le fond de la rainure une cale d'une épaisseur telle que le pied vient se bloquer contre les flancs supérieurs de la rainure. Le déplacement axial de l'aube est empêché par un verrou disposé dans des rainures radiales prévues dans un prolongement de la jante sur l'avant du disque de rotor et dans une partie du pied d'aube correspondant à ce prolongement.

Un tel dispositif est décrit dans le brevet français 2 345 605 dans lequel la cale empêché le mouvement radial du verrou, le mouvement axial de la cale étant lui-même empêcheé par une butée constituée par une lèvre prévue dans le capot avant fixé sur une bride du rotor et par un becquet ménagé sur la cale elle-même. Le remplacement d'une aube nécessite donc le démontage du capot, le retrait de la cale et l'enlèvement du verrou, à la suite de quoi l'aube peut être extraite de la rainure par glissement axial. L'utilisation du dispositif de verrouillage est relativement simple, mais il nécessite au moins en aval une bride fixée sur le disque pour le maintien du capot, et un talon d'aube d'une longueur au moins égale aux prolongements axiaux de la jante généralement appelés »dents« pour le logement du verrou.

La bride et les talons d'aube constituent une masse non négligeable qui augmente d'autant le porte-à-faux du rotor. En outre, l'usinage des talons d'aube augmente les coûts de production.

L'invention vise à la réalisation d'un dispositif de verrouillage d'aubes de soufflante et de fixation de capot avant permettant une diminution du porte-à-faux de l'ensemble soufflante compresseur intermédiaire, une diminution de la masse du disque par suppression entre autres de la bride avant destinée à fixer le capot et aussi une diminution de la masse des aubes par suppression des talons.

A cet effet, chaque dispositif de verrouillage comprend une pièce de fixation constituée de trois parties: une première partie parallélépipédique susceptible de s'engager dans les gorges radiales d'une dent de la jante, une deuxième partie prismatique ayant des faces convergentes définissant un angle au sommet égal à celui des côtes de la queue d'aronde des rainures axiales se prolongeant dans les dents et contre lesquelles elle vient buter radialement, et une troisième partie cylindrique au moins partiellement filetée pour recevoir des moyens pour la fixation du capot avant, les première et deuxième parties étant parallèles entre elles et perpendiculaires à l'axe de la troisième partie, l'extrémité amont de la cale étant prévue pour se loger au moins sous la première partie parallélépipédique de la pièce de fixation at la face aval du disque se prolongeant radialement par ne collerette sur laquelle vient se fixer au moins un flasque fermant l'extrémité aval des rainures.

Les explications et figures données ci-après à titre d'exemple, permettront de comprendre comment l'invention peut être réalisée.

La figure 1 est une coupe radiale partielle du rotor de soufflante numi de son capot avant.

La figure 2 est une vue partielle en coupe selon II de la figure 1.

La figure 3 est une vue en coupe selon III de la figure 1.

La figure 4 est une vue éclatée d'une portion de la jante et de la pièce de fixation coopérante.

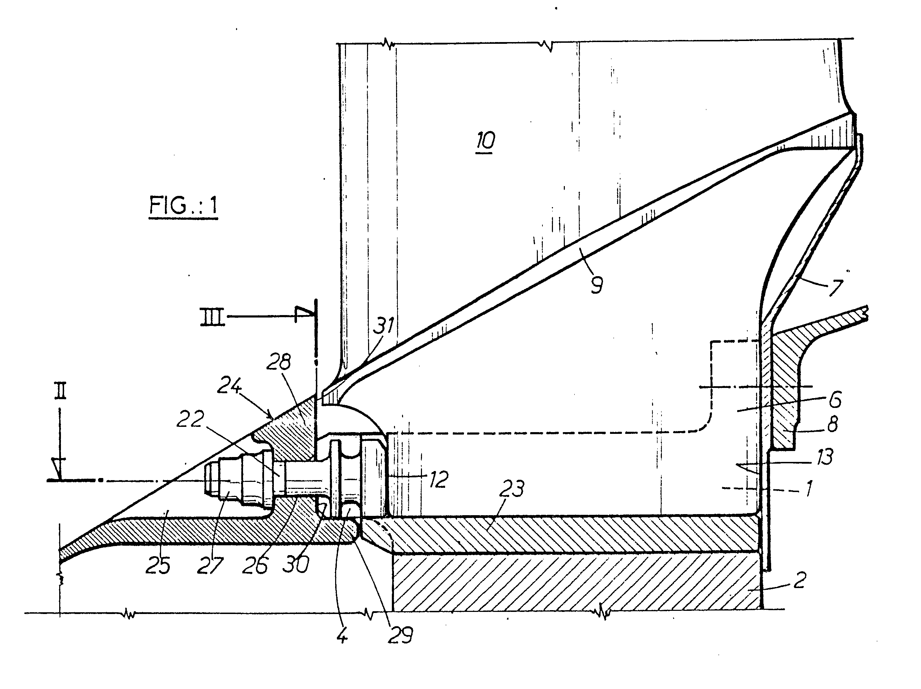

La figure 1 représente une coupe radiale partielle d'un rotor de soufflante destiné à recevoir un dispositif selon l'invention.

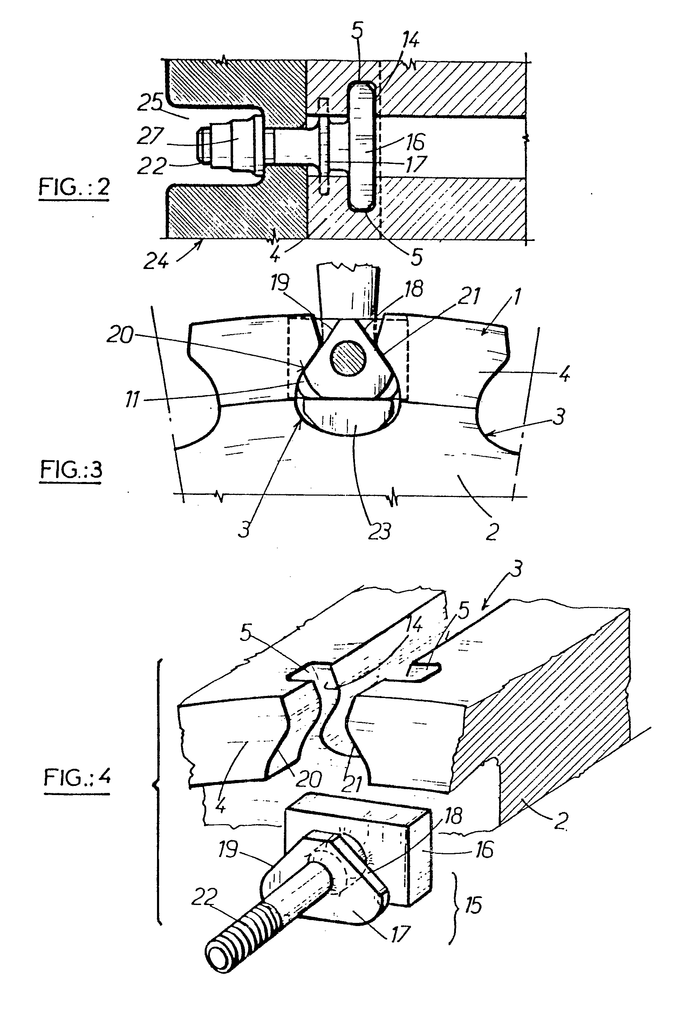

La jante 1 du disque 2 du rotor de soufflante porte des rainures axiales 3 approximativement en queue d'aronde, telles que représentées figure 3.

Les rainures se prolongent en amont dans un prolongement axial périphérique de la jante en formant des dents 4 dont la hauteur est au moins égale à la hauteur de la partie trapézoïdale de la queue d'aronde. Les bords de la partie de rainure formée dans le prolongement de la jante portent, dans une direction radiale, deux gorges 5 parallèles et opposées dont les bord aval 14 (dans le sens de l'écoulement du flux d'air) sont dans le plan de la face amont du disque. La face aval du disque so prolonge en collerette 6, radiale, périphérique, échancrée par les rainures 3, sur laquelle viennent se fixer par des boulons (non représentés) un flasque 7 et la bride 8 du tambour du compresseur intermédiaire. Le flasque ferme l'extrémité aval des rainures 3.

L'aube 10, dont le pied 11, présente une forme en queue d'aronde correspondant à celle de la rainure de jante, mais de hauteur inférieure, est glissée axialement dans la rainure 3. Selon une particularité du dispositif, le pied 11 d'aube se termine par des faces planes parallèles 12, 13 séparées par une distance égale à l'épaisseur du disque 2. On introduit alors radialement entre les dents 4 de la rainure 3, dans les gorges 5, que y sont ménagées, une pièce de fixation 15 (figure 4). Cette pièce est constituée d'une première partie parallélépipédique 16 susceptible de s'engager dans les gorges radiales 5, d'une deuxième partie approximativement prismatique 17 dont les faces rectangulaires convergentes 18, 19 définissent un angle au sommet égal à celui des côtes 20, 21 de la queue d'aronde de la rainure axiale, et une troisième partie cylindrique 22 au moins partiellement filetée pour recevoir les moyens de fixation du capot avant. Les plans des première et deuxième parties 16 et 17 sont parallèles entre eux et l'axe de la partie cylindrique 22 est perpendiculaire à ces plans.

Lorsque la partie 16 de la pièce de fixation est glissée radialement de bas en haut (sur la figure) dans les gorges 5, la partie prismatique 17 vient s'appuyer par ses faces 18, 19 contre les côtés 20, 21 de la rainure 3.

Pour maintenir la pièce 15 et le pied d'aube 11 en place contre les bords de la rainure, on introduit une cale 23 entre le fond de la rainure et la partie inférieure du pied d'aube. La longueur de la cale est telle que son extrémité amont dépasse suffisamment de la face du disque pour se trouver sous la partie parallélépipdique 16 et empêcher son déplacement centripète. Le déplacement centrifuge de la pièce est empêché par le blocage de la partie prismatique 17 contre les bords de la rainure.

Le capot 24 comporte, de manière connue, une partie annulaire 28 de section triangulaire dans laquelle sont prévus des chambrages 25 dont la base présente des perçages 26 pour le passage de la partie cylindrique filetée 22 des pièces 15, qui reçoit un écrou 27 de fixation du capot. La partie annulaire présente sur sa circonférence intérieure et parallèlement à l'axe du capot un anneau 29 qui est prévu pour appuyer contre l'extrémité amont des cales 23 et empêcher ainsi leur déplacement axial vers l'avant, leur déplacement axial vers l'arrière étant bloqué par le flasque 7. La paroi extérieure 30 des chambrages, perpendiculaire à l'axe du capot, vient, par serrage des écrous 27, s'appliquer contre la face latérale des dents 4 de la jante du disque, tandis que le bord 31 se place devant les extrémités amont des plateformes 9 des aubes 10 pour assurer la continuité aérodynamique.

Le dispositif de verrouillage d'aubes selon l'invention a permis une réduction de la masse totale du disque par suppression également de la bride aval généralement prévue sur le disque et destinée à la fixation du tambour de compresseur intermédiaire. Cette bride a été remplacée par une bride 8 que est fixée avec le flasque 7 sur la collerette radiale 6 de la jante du disque.

## Revendications

1. Rotor de turboréacteur, notamment de soufflante, comportant des dispositifs de verrouillage d'aubes et de fixation d'un capot avant, le pied de chaque aube étant maintenu dans une rainure axiale en queue d'aronde de la jante du disque du rotor par une cale placée entre le pied d'aube et le fond de la rainure, des dents formées dans le prolongement axial amont de la jante portant des gorges parallèles entre elles et symétriques par rapport à une direction radiale, caractérisé en ce que lesdits dispositifs comprennent chacun une pièce de fixation (15) constituée de trois parties: une première partie parallélépipédique (16) susceptible de s'engager dans les gorges radiale (5) d'une dent (4) de la jante, une deuxième partie prismatique (17) ayant des faces convergentes (18, 19) définissant un angle au sommet égal à celui des côtes (20, 21) de la queue d'aronde des rainures axiales (3) se prolongeant dans les dents et contre lesquelles elle vient buter radialement, et une troisième partie cylindrique (22) au moins partiellement filetée pour recevoir des moyens (27) pour la fixation du capot avant (24), les première et deuxième parties (16, 17) étant parallèles entre elles et perpendiculaires à l'axe de la troisième partie (22), l'extrémité amont de la cale (23) étant prévue pour se loger au moins sous la première partie parallélépipédique (16) de la pièce de fixation et la face aval du disque (2) se prolongeant radialement par une collerette (6) sur laquelle vient se fixer au moins un flasque (7) fermant l'extrémité aval des rainures (3).

2. Rotor selon la revendication 1, caractérisé en ce que le capot avent (24) présente une partie annulaire (28) de section triangulaire dans laquelle sont prévus des chambrages (25) dont la base présente des perçages (26) pour le passage des parties cylindriques (22), ladite partie présentant sur sa circonférence intérieure et parallèlement à l'axe du capot, un anneau cylindrique (29) prévu pour appuyer contre l'extrémité amont des cales (23).

3. Rotor selon la revendication 1, caractérisé en ce que les pieds des aubes ont une longueur égale à l'épaisseur du disque de rotor et présentent des faces (12, 13) déxtrémité parallèles.

## Patentansprüche

1. Strahlturbinenrotor, insbesondere von Gebläsen mit Verriegelungsvorrichtungen der Gebläseschaufeln und der vorderen Rotorkappe, wobei der Fuß jeder Schaufel in einer axialen schwalbenschwanzförmigen Nut der Felge der Rotorscheibe durch einen Keil gehalten wird, der zwischen dem Schaufelfuß und dem Grund der Nut angeordnet ist, Zähne, die in der axialen Verlängerung oberstromig der Felge geformt sind, tragen Nuten, die zueinander parallel und mit Bezug auf eine radiale Richtung symmetrisch sind, dadurch gekennzeichnet, daß die erwähnten Vorrichtungen je ein Befestigungsstück (15) besitzen, das durch drei Teile gebildet ist: einen ersten parallelepipedischen Teil (16), der in die radialen Nuten (5) eines Zahnes (4) der Felge eintreten kann, einen zweiten prismatischen Teil mit konvergierenden Flächen (18, 19), die einen Winkel bestimmen, der an der Spitze gleich demjenigen der Seiten (20, 21) des Schwalbenschwanzes der axialen Nuten (3) ist, die sich in die Zähne verlängern und gegen welche er zur radialen Anlage kommt, und einen dritten zylindrischen Teil (22), der zumindest teilweise mit einem Gewinde versehen ist zur Aufnahme von Mitteln (27) zur Befestigung der vorderen Rotorkappe (24), wobei der erste und der zweite Teil (16, 17) zueinander parallel und zur Achse des dritten Teils (22) senkrecht sind, das oberstromige Ende des Keils (23) vorgesehen ist zur Anordnung zumindest unter dem ersten parallelepipedischen Teil (16) des Befestigungsstücks und der unteren Fläche der Scheibe (2), die sich radial durch einen Bund (6) verlängert, auf dem mindestens ein Flansch (7) befestigt wird, welcher das unterstromige Ende der Nuten verschließt.

2. Rotor nach Anspruch 1, dadurch gekennzeichnet, daß die vordere Rotorkappe (24) einen ringförmigen Teil (28) von dreieckigem Querschnitt aufweist, in welchem Eintiefungen (25) vorgesehen sind, deren Grund mit Bohrungen (26) für den Durchtritt der zylindrischen Teile (22) versehen ist, welcher Teil an seinem inneren Umfang und parallel zur Achse der Rotorkappe einen zylindrischen Ring (29) aufweist, der zur Abstützung gegen das oberstromige Ende der Keile (23) vorgesehen ist.

3. Rotor nach Anspruch 1, dadurch gekennzeichnet, daß die Füße der Schaufeln eine Länge haben, die gleich der Dicke der Rotorscheibe ist und parallele Endflächen (12, 13) aufweist.

## Claims

1. Rotor of a turboreactor, especially of a fan, comprising devices for securing the fan blades and for fixing a front rotor cap, the root of each blade being held in an axial groove of dovetail form in the rim of the rotor disc by a wedge disposed between the blade root and the base of the groove, teeth formed in the axial upstream extension of the rim difining mutually parallel grooves which are symmetrical in relation to a radial direction, characterized in this that the said devices each comprise a securing member (15) constituted by three parts: first parallepiped part (16) capable of engaging in the radial grooves (5) of one tooth (4) of the rim, a second prismatic part (17) having convergent faces (18, 19) defining an apex angle equal to that of the sides (20, 21) of the dovetail of the axial grooves (13) extending into the teeth and against which they engage radially, and a third cylindrical part (22) at least partially screwthreaded in order to receive means (27) for securing of the front cap (24), the said first and second parts (16,17) being mutually parallel and perpendicular to the axis of the third part (22), the upstream end of the wedge (23) being provided so that it engages at least beneath the first parallepiped part (16) of the securing member and the downstream face of the disc (2) being extended radially by a collar (6) on which is secured at least one flange (7) closing off the downstream ends of the grooves (3).

2. Rotor according to claim 1, characterized in this that the front cap (24) has an annular part (28) of triangular section in which are provided recesses (25) of which the base has apertures (26) for the passage of the cylindrical parts (22), the said part having on its interior circumference and parallel to the axis of the cap, a cylindrical ring (29) arranged to abut against the upstream ends of the wedges (23).

3. Rotor according to claim 1, characterized in this that the roots of the blades have a length equal to the thickness of the rotor disc and have parallel end faces (12, 13).

FIG.: 1

0 061 948

FIG.: 2

FIG.: 3

FIG.: 4